Europäisches Patentamt

(19) **European Patent Office**

Office européen des brevets

(11) Publication number: **0 228 257 B1**

(12) # EUROPEAN PATENT SPECIFICATION

(45) Date of publication of the patent specification:
**12.09.90**

(51) Int. Cl.⁵: **G11B 27/36,** G11B 7/013, G11B 20/18

(21) Application number: **86309925.5**

(22) Date of filing: **18.12.86**

(54) Optical data recording and reproducing apparatus with erase function diagnosis.

(30) Priority: **20.12.85 JP 288528/85**

(43) Date of publication of application:
**08.07.87 Bulletin 87/28**

(45) Publication of the grant of the patent:
**12.09.90 Bulletin 90/37**

(84) Designated Contracting States:
**DE FR GB**

(56) References cited:
EP-A- 0 163 421
WO-A-85/01381
FR-A- 2 548 425
GB-A- 1 327 264
JP-A-60 019 736
JP-A-60 167 128
NL-A- 8 402 617
US-A- 3 720 923

PATENT ABSTRACTS OF JAPAN, vol. 10,
no. 162 (P-466)[2218], 10th June 1986; & JP-A-61 16 033
ELECTRONIC DESIGN, vol. 33, no. 16, 11th July 1985,
pages 93-100, Schiphol, NL; S. OHR: "Magneto-optics
combines erasability and high-density storage"

(73) Proprietor: **Matsushita Electric Industrial Co., Ltd., 1006, Oaza Kadoma, Kadoma-shi Osaka-fu, 571(JP)**

(72) Inventor: **Satoh, Isao,, 36-12, Naritahigashigaoka, Neyagawa-shi(JP)**
Inventor: **Ichinose, Makoto, 4-3-303 Harayamadai-1-cho, Sakai-shi(JP)**
Inventor: **Fukushima, Yoshihisa, 14-C-508, Sekime-6-chome, Joto-ku Osaka(JP)**
Inventor: **Kuroki, Yuzuru, 14-6-410, Minowa-2-chome, Toyonaka-shi(JP)**
Inventor: **Takagi, Yuji, 3-14, Miyukihigashimachi, Neyagawa-shi(JP)**

(74) Representative: **Atkinson, Ralph et al, Fitzpatricks Europe House World Trade Centre, London E1 9AA(GB)**

## Description

The present invention relates to optical data recording and reproducing apparatus as defined in the preamble of claim 1 and known from JP-A 60 167 128. More particularly, it concerns the diagnosis of the erase function of such an apparatus.

It is becoming increasingly common for information of all sorts to be stored on optical disks (also referred to as laser disks). An optical disk is in essence a disk of reflective material, usually in the form of a reflective coating or layer on some substrate onto which date can be written in binary form along concentric tracks by modifying the reflective layer with a laser into a sequence of reflective/less reflective portions. Once written, the data can be read off the disk by scanning it along the tracks with another laser and detecting the reflected light.

Until quite recently it has been very difficult to make an optical disk that can be erased and re-written several times. One possible answer is to construct the reflective coating (the recording medium) out of a material which has two solid states, one – a crystaline state – of higher reflectivity than the other – an amorphous state, between which the material can be driven by the application of heat energy in a controlled fashion. For example, when the recording medium material is heated to a temperature near the melting point and then annealed – allowed to cool relatively slowly – a reflective crystal state is obtained, but when this crystalline form is heated to a level near its melting point and then quenched – cooled rapidly – then by contrast a poorly reflective amorphous state is attained.

There are, however, problems with this system, and these become especially serious when, rather like in a conventional magnetic tape or disk recording system, the erasure of old data is to be effected simultaneously with (but physically on the track just ahead of) the writing of new data. The main problem is one of ensuring that the old data has in fact been erased and replaced by the nes data. The procedure of checking this is known as "erase function diagnosis", and may be achieved by reserving a predetermined part of the disk to be a "check" portion, and by writing to that portion, after erasing what was previously there, a predetermined set of data – and then by reading the written data to see whether it is indeed the same as what should have been written.

Unfortunately, the application of this checking technique is itself beset by problems. For instance, as the number of erasing and recording (writing) operations increase, so the "grooves" of the (guide) track of the recording medium are deformed, and so the recording layer is separated from the disk material due to the strain of the many heat cycles involved. This phenomenon is called the "fatigue" of the recording medium, and results in a sharp deterioration in the bit error rate (BER) of the disk. Eventually, it becomes impossible to determine whether a sequence of bit errors has been caused by failure of the erase function or by the physical deterioration of the recording medium.

The present invention seeks to provide an optical data recording and reproducing apparatus capable of erase function self-diagnosis without being affected by any deterioration of the recording medium. It proposes an optical data recording and reproducing apparatus wherein the number of accumulated erase function tests is written with the test data in one of a plurality of erase test sectors of an optical disk, and the data read from the erase test sector is compred with the recorded data; when a data error is detected or the accumulated tests exceeds a predetermined number, a new erase test sector is used in subsequent erase function diagnosis.

In one aspect, therefore, the invention provides optical data recording and reproducting apparatus comprising:

an erasable type optical disk for recording and reproducing data, having an optically detectable guide track divided into a plurality of sectors, each including a sector identifier having a sector address recorded thereon and a data field for recording data, said erasable type optical disk further including a plurality of erase test sector portions for recording thereon test data used to check a data erase function and inclding data sector poritons for recording user data;

test number counting means for counting the accumulated number of tests;

error correction means for adding an error correction code by encoding the accumulated number of tests and the test data in a recording operation, and for performing error detection and correction of encoded data which is read out in a reproducing operation;

data write means for recording the encoded data on one of the said erase test sector portions;

data read means for reading data from the data field of one of said sectors; and

accumulated test number checking means for checking the accumulated number of tests which have been read;

said data read means reading the test data and the accumulated number of tests written by said data write means on said erase test sector,

wherein, when errors equal to or larger than a predetermined number are detected in the read data by said error correction means, or when said accumulated test number checking means detects that the accumulated number of tests exceeds a predetermined accumulated test number, subsequent erase function diangosis is performed in a new sector of said erase test sector portions, thereby separating an error caused due to a defect or deterioration of a recording medium and enabling detection of a failure in said data write means.

As will be clear, in the aparatus of the present invention the fatigue of the recording medium, which may be caused either by a defect or by a reduced erasing efficiency due to the increase in the number of erasing operations, is controlled by the accumulated number of erase function tests. The fatigue of the recording medium and the fault of the erase function are therefore completely separated from each other, thus improving the reliability of erase function self-diagnosis. This erase function self-diagnosis is accomplished in such a manner that to start with test data together with the accumulated number of erase function tests are recorded in and read from a first erase test sector, and the recorded data is compared with the read data. However, when an error is detected by an error correction detection code, or when the accumulated number of tests exceeds a predetermined value, a marking signal is written in the data field of the particular sector, and a second erase test sector – a new one, not yet marked – is used for subsequent self-diagnosis of the erase function, thereby making possible erase function self-diagnosis which is unaffected by fatigue of the recording medium. Any erase test sector with a marking signal, which is detected by sequentially reading the erase test sectors at the beginning of the self-diagnosis, is not used.

Various aspects of the invention are now described in more detail with reference to the accompanying Drawings, in which:

Figure 1 is a block diagram showing an optical data recording an dreproducing apparatus according to the present invention;

Figure 2 is a diagram showing a track map of an optical disk having an erase self-diagnosis track;

Figure 3 shows phase changes between amorphous state A and crystal state C of a phase-change recording medium of a (conventional) optical data recording and reproducing apparatus; and

Figure 4 is a diagram for explaining a configuration and distribution of a light beam (for data erasure and recording) for realizing the conditions for temperature increase followed by quenching and temperature increase followed by annealing.

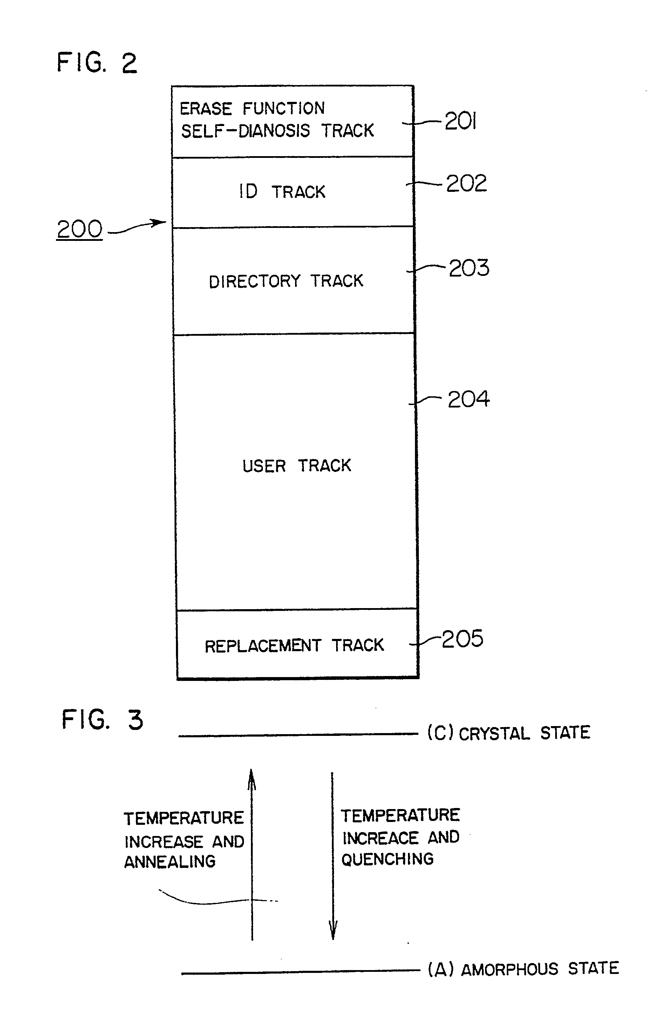

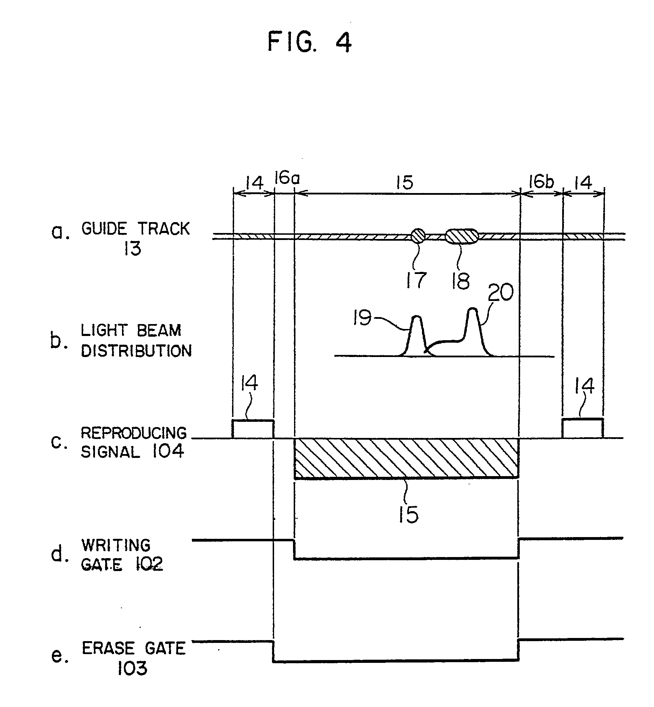

The general technology is explained first, with reference to Figures 3 and 4.

Figure 3 shows diagrammatically a phase change between an amorphous state A and a crystal state C of the phase-change recording medium of a (conventional) optical data recording and reproducing apparatus. The reflectivity in amorphous state A is smaller than that in crystal state C.

When a part of the recording medium is heated to a temperature near the melting point, and then annealed (cooled slowly), a crystal state is obtained. However, when the part in crystal state C is locally heated to a temperure near its melting point, followed by quenching (cooled rapidly), in contrast the amorphous state A is attained.

Figure 4(a) shows the configurations of a light beam for realizing the conditions necessary for temperature increase followed by quenching and for temperture increase followed by annealing, and Figure 4(b) shows the light distribution for these effects. In Figure 4, there is a guide track (13) deposited with a recording layer by evaporation. The track 13 is split into sectors, and each sector has an identifier (ID field 14) including such data as the track and sector address, a data field (15) for recording data, gaps (16a, b) for absorbing time variations due to rotational speed variations of the disk, a recording and reproducing light beam (17) of short diameter (and light intensity distribution 19), an erase light beam (18) of extended diameter (and light intensity distribution 20). The two light beams 17, 18, by creating annealing conditions with an extended diameter (18) and quenching conditions with a short diameter (17), perform the erasing and recording operations in one revolutin of the disk, thus making possible what is called "simultaneous" erasing.

Figure 4(c) shows the waveform of the reproduction signal produced from the sector identifier (ID field) 14, data field 15, and gaps 16a, 16b, with the reflectivity of the sector identifier (ID field) 14, gaps 16a, 16b and data field 15 decreasing in that order.

Figure 4(d) shows a write gate signal (102) for commanding the writing in data field 15 of the recording-reproducing light beam 17 set in a record mode and modulated with the write data.

Figure 4(e) shows an erase gate signal (103) for controlling the time during which the erase light beam 18 irradiates the data field 15 with a predetermined intensity. Data is recorded in the data field 15 with the succeeding recording-reproducing light beam 17 while erasing the data field 15 with the preceding erase light beam 18 by enabling both the write gate signal 102 and the erase gate signal 103. At the end of data recording, the write gate signal 102 and the erase gate signal 103 are both turned off.

In the above-mentioned configuration the erase light beam 18 and the recording-reproducing light beam 17 are exactly aligned on the same guide track 13, and therefore it is necessary both to trace the guide track with high accuracy and to shine the erase light beam 18 and the recording-reproducing light beam 17 on the sector to be erased with a predetermined erasing power and recording power respectively. For simultaneous erasing, it is important to determine by prior diagnosis that these operations are performed normally. This diagnosis of the erase function is performed by rewriting a predetermined data in a predetermined sector, and comparing the data read from the disk with the original write data.

Unfortunately, with the increase in the number of erasing and recording processes, the recording medium-filled grooves of the guide track are deformed, and the recording medium film itself is separated from the disk material due to the strain of the heat cycle. This recording medium fatigue phenomenon causes a sharp deterioration (increase) in the bit error rate (BER) of the disk. Indeed, in the event of a long burst of errors the problem of inaccurate self-diagnosis of the erase functoin may make it impossible to determine whether the burst error has been caused by the erasing failure due to an inferior erase funtin or to the deterioration of the recording medium.

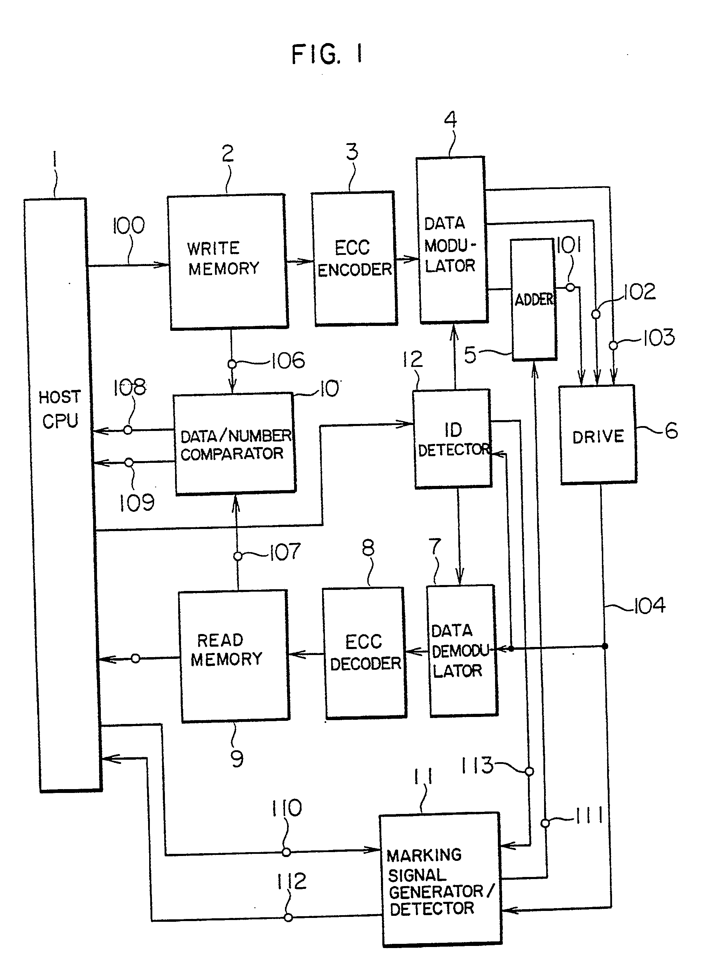

This problem can be solved at least in part by the apparatus of the invention. A block diagram of one embodiment of an optical data recording an dreproducing apparatus according to the present invention is shown in Figure 1.

In Figure 1, there is a host computer (1), a memory (2) for writing data or test data and the accumulated number of tests, an ECC encoding sectin (3) for generating an Error Correctin Code, a data modulator (4) for digitally modulating data with the ECC code, an adder (5) for adding a marking signal (111), an optical disk drive (6), a data demodulator (7) for digitally demodulating a reproduction signal (104), an ECC decoder (8) for correcting errors, and a read memory (9) for storing data with the error corrected. There is also shown a comparator (10) for comparing the written data of the write memory 2 with the read data of the read memory 9, and also for comparing the accumulated number of tests read with a set number of erasures. There is a marking signal generator-detector (11) for generating a marking signal to be recorded in an erase test sector, and for detecting a marked signal recorded. Finally, there are shown the various signals – an input data signal (110), a signal for writing data in the optical disk drive (101), a write gate signal (102), an erase gate signal (103), a reproduction signal (104), from the optical disk drive, an output data signal (105), a record data signal (106), a read data signal (107), a data non-coincidence signal (108), a signal (109) indicating a set number of erasures exceeded, a marking start signal (110), a marking signal (111), a marking detection signal (112), and a sector detection signal (113).

The operation of an optical data recording and reproducing appartus according to the Figure 1 embodiment is as follows:

First, the host CPU 1 instructs the optical disk drive 6 to seek the erase self-diagonsis track.

The host CPU 1 identifies a predetermined erase test sector on the basis of the reproduction signal 104 from the optical disk drive 6. Then, the host CPU 1 reads out an erase test sector. The reproduction signal 104 from the erase test sector is demodulated at the data demodulator 7, so that any error in the data is corrected in the ECC decoder 8 and stored in the read memory 9. The data/number comparator 10 checks whether the accumulated number of tests in the read memory 9 has not exceeded a predetermined number of erasures. If the predetermined number of erasures is not exceeded, the host CPU 1 applies a test recording data to the input data signal 100, and loads the writes memory 2. Then the accumulated number of tests read is incremented, and the resulting number is writter in the write memory 2 by the host CPU 1.

The error correction code is added to the data of the write memory 2 at the ECC encoder 3, and the resulting signal is digitally modulated at the data modulator 4. The write data signal 101 enables both the write gate signal 102 and the erase gate signal 103, and applies them to the optical disk drive 6, thereby writing data by erasure or recording in the erase test sector.

Next, the host CPU 1 reads this erase test sector. The reproduction signal 104 from the erase tesst sector is demodulated at the data demodulator 7, and any error in the data is passed through the ECC decoder 8 without correction and stored in the read memory 9. The data in the read memory 9 is compared with the write data of the write memory 2 at the data/number comparator 10. If the read data of the read memory 9 matches the write data of the write memory 2, the erase function self-diagnosis is normal. If there is no match, an error is detected. An error occurrence can also be recognised, and the deterioration of the erase test sector can be determined, from an error syndrome formed in the ECC decoder 8.

In the case where the accumulated number of tests read out is found to have exceeded the predetermined numer of erasures, the data/number comparator 10 applies the set number of erasures over signal 109 to the host CPU 1. If, on the other hand, the write data of the read memory 9 fails to match the read data of the write memory 2, the data non-coincidence signal 108 is applied to the host CPU 1, so that the host CPU 1 marks the erase test sector. This marking indicates that the particular sector is unusable for an erase test. The host CPU 1 sets the ID data of the track address and the sector address of the erase test sector in the ID detector 12, and drives the marking signal generator detector 11 to start the marking with the marking start signal 110. Upon detection of the erase test sector by the ID detector 12, the sector detection signal 113 is applied to the marking signal generator detector 11, with the result that the marking signal 111 is applied to the adder 5. The marking signal 111, as a wirte data signal 101, is applied, together with the write gate signal 102 and the erase gate signal 103, to the optical disk drive 6, and recorded in the data field section 15 of the erase test sector. The marking in the erase test sector is detected at the marking signal generator detector 11 on the basis of the reproduction signal 104 of the optical disk drive 6, and applied as a marking detection signal 112 to the host CPU 1. The host CPU 1 identifies the erase test sector by jumping to a sector not marked.

The erase test sector of the erase function self-diagnosis track of a new optical disk is initialized before operation. Specifically, with the accumulated number of tests set at 1, test data are recorded in all the erase test sectors. Then, data are read and compared with the write (recorded) data to check for any defect of the recording medium and write a marking signal in the non-coincident sector. By doing so, there is prepared an erase test sector free of any defect of the recording medium.

A special signal easily distinguished from a burst signal, a pulse train signal, a gated RF signal of other data signal is used as a marking signal.

Figure 2 shows an embodiment of the track map of an optical disk (200) having an erase function self-diagonsis track (201). As well as the erase function self-diagonsis track 201, the optical disk also includes an ID track (202) for recording the control ID data of the optical disk, a replacement track (205) for replacing defective tracks (203), and user tracks (204) for recording user data.

As mentioned above, according to the present embodiment, the accumulated number of tests together with the test data are written in an erase test sector and the record data is compared with the read data thereby to perform self-diagnosis of the erase function. In the case of non-matching as the result of the comparison, or when the accumulated number of tests exceeds a predetermined value, the data field of the particular sector is written with a marking signal. In this way, self-diagnosis of the erase function is accurately performed without being affected by the fatigue of the recording medium.

In the above-mentioned embodiment, if the erase test is conducted by track instead of by erase test sector it is possible to diagnose the erase function including the tracking accuracy and the accuracy of alignment of the erase light beam 18 and the recording-reproducing light beam 17 on the guide track 13.

It will thus be understood from the foregoing description that, according to the present invention, self-diagnosis of the erase function is made possible without being adversely affected by the fatigue of the recording medium, thereby resulting in a great practical advantage.

## Claims

1. An optical data recording and reproducing apparatus comprising:

an erasable type optical disk (200) for recording and reproducing data, having an optically detectable guide track (13) divided into a plurality of sectors, each including a sector identifier (14) having a sector address recorded thereon and a data field (15) for recording data, characterized in that said erasable type optical disk forther includes a plurality of erase test sector portions for recording thereon test data used to check a data erase function and including data sector portions for recording user data; and in that the apparatus additionally comprises

test number counting means (1) for counting the accumulated number of tests;

error correction means (3, 8) for adding an error correction code by encoding the accumulated number of tests and the test data in a recording operation, and for performing error detection and corection of encoded data which is read out in a reproducing operation;

data write means (2, 3, 4, 6) for recording the encoded data on one of the said erase test sector portions;

data read means (7, 8, 9) for reading data from the data field of one of said sectors; and

accumulated test number checking means (10) for checking the accumulated number of tests which have been read;

said data read means reading the test data and the accumulated number of tests written by said data write means on said erase test sector,

wherein, when errors equal to or larger than a predetermined number are detected in the read data by said error correction means, or when said accumulated test number checking means detects that the accumulated number of tests exceeds a predetermined accumulated test number, subsequent erase function diagnosis is performed in a new sector of said erase test sector portions, thereby separating an error caused due to a defect or deterioration of a recording medium and enabling detection of a failure in said data write means.

2. Apparatus according to Claim 1, further comprising means (11) for writing a marking signal in the data field of a sector when either an error therein has been detected by the data error detecting means (3, 8) or the test number checking means (10) has detected that the accumulated number of tests has exceeded the predetermined value, wherein erase function diagnosis subsequent to the writing of a marking signal is performed with a new erase test sector not yet marked by a said marking signal.

3. Apparatus according to any of the preceding Claims, wherein a value sufficiently smaller than the number of repetitive erasures of the recording medium is set as an accumulated number of tests in the accumulated test number checking means (10).

4. An optical data recording and reproducing apparatus according to claim 1, wherein said data write means includes light beam irradiating an erase light beam (18) and a recording and reproducing light beam (17) onto the guide track of said erasable type optical disk, and the test data is recorded at a time on the test sectors which are successive for a length corresponding to one track of said test sector portions, and said error correction means detects an error of data read out from said successive test sectors thereby to diagnose that said erase light beam and said recording and reproducing light beam of said light beam irradiating means are aligned on the same guide track.

## Revendications

1. Appareil d'enregistrement et de reproduction de données optiques, comprenant un disque optique (200) de type effaçable pour l'enregistrement et la reproduction de données, comportant une piste pilote détectable optiquement (13), divisée en une muitiplicité de secteurs contenant chacun un identificateur de secteur (14), sur lequel est enregistrée une adresse de secteur, et une zone de données (15) pour l'enregistrement de données, caractérisé en ce que ledit disque optique de type effaçable contient en outre une multiplicité de parties de secteur d'essai d'effacement pour l'enregistrement de données d'essai utilisées pour vérifier une fonction d'effacement de données, ainsi que des parties de secteur de données pour l'enregistrement de données d'utilisateur; et en ce que l'appareil comprend en outre des moyens de comptage du nombre d'essais (1) pour compter le nombre cumulé d'essais;

– des moyens de correction d'erreur (3, 8) pour ajouter un code de correction d'erreur par codage du nombre cumulé d'essais et des données d'essai dans une opération d'enregistrement, et pour effectuer une détection d'erreur et une correction de données codées qui sont lues dans une opération de reproduction;

– des moyens d'écriture de données (2, 3, 4, 6) pour enregistrer les données codées sur l'une desdites parties de secteur d'essai d'effacement;

– des moyens de lecture de données (7, 8, 9) pour extraire des données dè la zone de données de l'un desdits secteurs; et des moyens de vérification du nombre cumulé d'essais 410) pour vérifier le nombre cumulé d'essais qui ont été lus;

– lesdits moyens de lecture de données lisant les données d'essai et le nombre cumulé d'essais écrits par lesdits moyens d'écriture de données sur ledit secteur d'essai d'effacement;

– dans lequel, quand des erreurs en un nombre égal ou supérieur à un nombre prédéterminé sont détectées dans les données lues par lesdits moyens de correction de données, ou quand lesdits moyens de vérification du nombre cumulé d'essais détectent que le nombre cumulé d'essais dépasse un nombre cumulé d'essais prédéterminé, un diagnostic de fonction d'effacement subséquent est effectué dans un nouveau secteur desdites parties de secteur d'essai d'effacement, de manière à séparer une erreur causée en conséquence d'un défaut ou d'une détérioration d'un support d'enregistrement et à permettre la détection d'un incident dans lesdits moyens d'écriture de données.

2. Appareil selon la revendication 1, comprenant en outre des moyens (11) pour écrire un signal de marquage dans la zone de données d'un secteur, soit lorsqu'une erreur y a été détectée par les moyens de détection d'erreur de données (3, 8), soit lorsque les moyens de vérification du nombre d'essais (10) ont détecté que le nombre cumulé d'essais avait dépassé la valeur prédérminée, et dans lequel le diagnostic de fonction d'effacement à la suite de l'écriture d'un signal de marquage est effectué avec un nouveau secteur d'essai d'effacement qui n'est pas encore marqué par un tel signal de marquage.

3. Appareil selon la revendication 1 ou 2, dans lequel une valeur suffisamment inférieure au nombre d'effacements répétitifs du support d'enregistrement est fixée en tant que nombre cumulé d'essais dans les moyens de vérification du nombre cumulé d'essais (10).

4. Appareil d'enregistrement et de reproduction de données optiques selon la revendication 1, dans lequel lesdits moyens d'écriture de données comprennent des moyens de rayonnement lumineux qui projettent un faisceau lumineux d'effacement (18) et un faisceau lumineux d'effacement (18) et un faisceau lumineux d'enregistrement et de reproduction (17) sur la piste pilote dudit disque optique de type effaçable, et dans lequel les données d'essai sont enregistrées à un moment sur les secteurs d'essai qui sont consécutifs sur un longeur correspondant à une piste desdites parties de secteur d'essai, et lesdits moyens de correction d'erreur détectent une erreur des données extraites desdits secteurs d'essai consécutifs, afin de diagnostiquer de cette façon, que ledit faisceaue lumineux d'effacement et ledit faisceau lumineux d'enregistrement et de reproduction desdits moyens de rayonnement lumineux sont alignés sur la même piste pilote.

**Patentansprüche**

1. Optische Datenaufzeichnungs- und Wiedergabeeinrichtung enthaltend:
– eine löschbare optische Platte (200) zur Aufzeichnung und Wiedergabe von Daten, die eine optisch erfaßbare Führungsspur (13) aufweist, die in eine Anzahl von Sektoren unterteilt ist, von denen jeder ein Sektoridentifikationsfeld (14) mit einer darauf aufgezeichneten Sektoradresse und ein Datenfeld (15) zur Aufzeichnung von Daten enthält, dadurch gekennzeichnet, daß die löschbare optische Platte weiterhin eine Anzahl von Löschtestsektorbereichen zur Aufzeichnung von zum überprüfen einer Datenlöschfunktion verwendeten Testdaten darauf und mit Datensektorbereichen zur Aufzeichnung von Benutzerdaten enthält; und daß die Einrichtung zusätzlich enthält
– eine Testanzahlzähleinrichtung (1) zum Zählen der akkumulierten Anzahl von Tests;
– eine Fehlerkorrektureinrichtung (3, 8) zum Hinzufügen eines Fehlerkorrekturcodes durch Kodieren der akkumulierten Anzahl von Tests und der Testdaten in einem Aufzeichnungsvorgang und zur Durchführung einer Fehlererfassung und Korrektur der in einem Wiedergabevorgang ausgelesenen kodierten Daten;
– eine Datenschreibeinrichtung (2, 3, 4, 6) zur Aufzeichnung der kodierten Daten auf einen der Löschtestsektorbereiche;
– eine Datenleseeinrichtung (7, 8, 9) zum Lesen von Daten aus dem Datenfeld eines der Sektoren; und eine Prüfeinrichtung (10) für die akkumulierte Testanzahl, um die akkumulierte Anzahl von Tests zu überprüfen, die gelesen worden sind;
– wobei die Datenleseeinrichtung die Testdaten und die akkumulierte Anzahl von Tests liest, die von der Datenschreibeinrichtung auf den Löschtestsektor geschrieben worden sind;
– wobei, wenn von der Fehlerkorrektureinrichtung in den gelesenen Daten Fehler gleich oder größer als eine vorgegebene Anzahl erfaßt werden, oder wenn die Prüfeinrichtung für die akkumulierte Testanzahl erfaßt, daß die akkumulierte Anzahl von Tests eine für die akkumulierten Tests vorgegebene Anzahl übersteigt, eine folgende Löschfunktionsdiagnose in einem neuen Sektor der Löschtestsektorbereiche durchgeführt wird, um dadurch einen aufgrund eines Defekts oder einer Verschlechterung des Aufzeichnungsmediums bewirkten Fehler zu unterscheiden und einen Fehler in der Datenschreibeinrichtung erfassen zu können.

2. Einrichtung nach Anspruch 1, weiterhin enthaltend eine Einrichtung (11) zum Schreiben eines Markierungssignals in das Datenfeld des Sektors, wenn entweder von der Datenfehlererfassungseinrichtung (3, 8) darin ein Fehler erfaßt worden ist oder die Testanzahlprüfeinrichtung (10) erfaßt hat, daß die akkumulierte Anzahl von Tests den vorgegebenen Wert überschritten hat, wobei die auf das Schreiben eines Markierungssignals folgende Löschfunktionsdiagnose mit einem noch nicht durch das Markierungssignal markierten neuen Löschtestsektor durchgeführt wird.

3. Einrichtung nach einem der vorhergehenden Ansprüche, bei der ein Wert, der hinreichend kleiner ist als die Anzahl von wiederholten Löschungen des Aufzeichnungsmediums, als akkumulierte Anzahl von Tests in der Prüfeinrichtung (10) für die akkumulierte Testanzahl eingestellt ist.

4. Optische Datenaufzeichnungs- und Wiedergabeeinrichtung nach Anspruch 1, bei der die Datenschreibeinrichtung eine Lichtstrahl-Ausstrahlungseinrichtung enthält, die einen Löschlichtstrahl (18) und einen Aufzeichnungs- und Wiedergabelichtstrahl (17) auf die Führungsspur der löschbaren optischen Platte einstrahlt, und die Testdaten auf die Testsektoren zugleich aufgezeichnet werden, die auf eine Länge entsprechend einer Spur der Testsektorbereiche aufeinanderfolgen, und die Fehlerkorrektureinrichtung einen Fehler der von den aufeinanderfolgenden Testsektoren ausgelesenen Daten erfaßt, um dadurch zu diagnostizieren, daß der Löschlichtstrahl und der Aufzeichnungs- und Wiedergabelichtstrahl der Lichtstrahl-Ausstrahlungseinrichtung auf dieselbe Führungsspur ausgerichtet sind.

# FIG. 1

FIG. 2

| |
|---|
| ERASE FUNCTION SELF-DIANOSIS TRACK ⟨—201 |
| ID TRACK ⟨—202 |
| DIRECTORY TRACK ⟨—203 |
| USER TRACK ⟨—204 |
| REPLACEMENT TRACK ⟨—205 |

200 →

FIG. 3

——————————— (C) CRYSTAL STATE

TEMPERATURE INCREASE AND ANNEALING

TEMPERATURE INCREACE AND QUENCHING

——————————— (A) AMORPHOUS STATE

# FIG. 4

a. GUIDE TRACK 13

b. LIGHT BEAM DISTRIBUTION

c. REPRODUCING SIGNAL 104

d. WRITING GATE 102

e. ERASE GATE 103